# EUROPÄISCHE PATENTSCHRIFT

(11) **EP 2 268 520 B1**
(45) Veröffentlichungstag und Bekanntmachung des Hinweises auf die Patenterteilung: **11.10.2017**
(21) Anmeldenummer: 08786916.0
(22) Anmeldetag: 06.08.2008
(51) Int. Cl.: B60W 20/00

(54) **VERFAHREN UND VORRICHTUNG ZUR ÜBERWACHUNG EINES HYBRIDANTRIEBS**
METHOD AND DEVICE FOR MONITORING A HYBRID DRIVE
PROCÉDÉ ET DISPOSITIF DE SURVEILLANCE D'UN ENTRAÎNEMENT HYBRIDE

(30) Priorität: 12.09.2007 DE 102007043493
(43) Veröffentlichungstag der Anmeldung: 05.01.2011
(73) Patentinhaber: Robert Bosch GmbH, 70442 Stuttgart (DE)
(72) Erfinder: PUSHKOLLI, Beqir, 71638 Ludwigsburg (DE)
(86) Internationale Anmeldenummer: PCT/EP2008/060308
(87) Internationale Veröffentlichungsnummer: WO 2009/033894

(56) Entgegenhaltungen:
- WO-A1-2005/115785
- US-A1- 2002 157 883
- US-A1- 2007 102 930

## Beschreibung

### Stand der Technik

Die Erfindung betrifft eine Vorrichtung und ein Verfahren zur Überwachung der Temperaturen eines Verbrennungsmotors und einer elektrischen Maschine in einem Hybrid-Fahrzeug, siehe zum Beispiel die US-A-2007/102930. Hybridfahrzeuge umfassen als Antriebseinheit neben dem Verbrennungsmotor üblicherweise eine elektrische Maschine, wobei in Abhängigkeit von der Fahrsituation entweder der Motor- oder der Generatorbetrieb zum Antrieb verwendet wird. Im Motorbetrieb erzeugt die elektrische Maschine ein zusätzliches Antriebsmoment, das den Verbrennungsmotor z.B. in einer Beschleunigungsphase unterstützt. Im Generatorbetrieb wird dagegen die bei der Verzögerung des Fahrzeugs frei werdende kinetische Energie in elektrische Energie gewandelt (Rekuperation). Die so gewonnene elektrische Energie wird in einem Energiespeicher, wie z.B. einer Batterie oder einem Super-Cap, gespeichert und kann in anderen Fahrsituationen z. B. zum Antrieb des Fahrzeugs oder zur Versorgung elektrischer Verbraucher genutzt werden. Der Wirkungsgrad des Fahrzeugs kann dadurch erheblich gesteigert werden.

Aufgabe der vorliegenden Anmeldung ist es, eine Überwachungsvorrichtung bzw. ein Überwachungsverfahren für die elektrische Maschine bzw. den Verbrennungsmotor bereitzustellen.

### Vorteile der Erfindung

Mit der vorliegenden Erfindung wird eine Vorrichtung bzw. ein Verfahren zur Überwachung des Betriebs eines Hybridantriebs in einem Fahrzeug beschrieben. Dabei ist vorgesehen, dass der Hybridantrieb sowohl einen Verbrennungsmotor als auch eine elektrische Maschine aufweist, die unabhängig voneinander betrieben werden können. Zur Überwachung dieser beiden Einheiten ist vorgesehen, eine Temperatur des Verbrennungsmotors und eine Temperatur der elektrischen Maschine zu erfassen und miteinander zu vergleichen. Der Kern der Erfindung besteht nun darin, dass eine Fehlermeldung erzeugt wird, wenn die beiden Temperaturen unzulässig weit auseinander liegen. Es ist vorgesehen, dass die Temperaturen erst dann auf eine irreguläre Abweichung hin verglichen werden, wenn eine vorgegebene Zeitdauer seit dem Abschalten des Verbrennungsmotors vergangen ist. Durch eine derartige Fehlermeldung können Betriebszustände des Hybridantriebs, die zu einer Beeinträchtigung der Funktionsweise des Antriebs führen können, rechtzeitig erkannt werden. Wird in Abhängigkeit eines derartigen Fehlers die Ansteuerung der Einheiten modifiziert, erhöht das die Effizienz und die Lebensdauer des gesamten Systems.
Besonders vorteilhaft ist es, wenn bei der Erzeugung der Fehlermeldung die Abschaltung des Verbrennungsmotors berücksichtigt wird. So ist beispielsweise vorgesehen, den Fehler in Abhängigkeit von der Abkühlung des Verbrennungsmotors nach dessen Abschaltung zu erfassen. Dies kann dadurch geschehen, dass die Erkennung auf unzulässige Abweichung der beiden Temperaturen in Abhängigkeit von der Zeit seit Abschaltung des Verbrennungsmotors variabel ausgestaltet ist.

In einer Weiterbildung der Erfindung wird als erste Temperaturgröße die Kühlmitteltemperatur des Verbrennungsmotors erfasst. Zusätzlich ist vorgesehen, die Ständertemperatur der elektrischen Maschine aufzunehmen. Darüber hinaus ist jedoch auch die Erfassung anderer Temperaturgröße denkbar, die repräsentierbare Temperaturen der jeweiligen Einheit darstellen.

Bei der Überwachung bzw. bei der Ermittlung eines Fehlers kann vorgesehen sein, die Differenz aus den beiden an den Einheiten gemessenen Temperaturen zu bilden, um diese Differenz mit vorgegebenen Werten, beispielsweise in Form einer Kennlinie, zu vergleichen.

Um nicht fälschlicherweise eine zu große Abweichung der Temperaturen und somit einen Fehler zu detektieren, ist vorteilhafterweise vorgesehen, bei der Überwachung verschiedene Betriebszustände des Fahrzeugs zu berücksichtigen. So kann beispielsweise eine aktivierte Standheizung bei deaktiviertem Verbrennungsmotor zu einer einseitigen Temperaturerhöhung führen, die ohne Berücksichtigung eine falsche Fehlermeldung erzeugt. Weiterhin kann auch der Austausch oder der Defekt von Systemkomponenten zu einer unzulässigen Abweichung der erfassten Temperaturen führen, weshalb diese Ereignisse ebenfalls bei der Überwachung berücksichtigt werden müssen. Hierbei seien speziell defekte Temperatursensoren, ein Kühlmittelwechsel (z.B. mit einer anderen Temperatureigenschaft), Fehler in der Spannungsversorgung, allgemeine Signalunterbrechungen oder auch Kurzschlüsse genannt.

Der durch die Überwachung erkannte Fehler kann anschließend beim Neustart bzw. bei der Ansteuerung des Verbrennungsmotors genutzt werden.

Weitere Vorteile ergeben sich aus der nachfolgenden Beschreibung von Ausführungsbeispielen bzw. aus den abhängigen Patentansprüchen.

### Zeichnungen

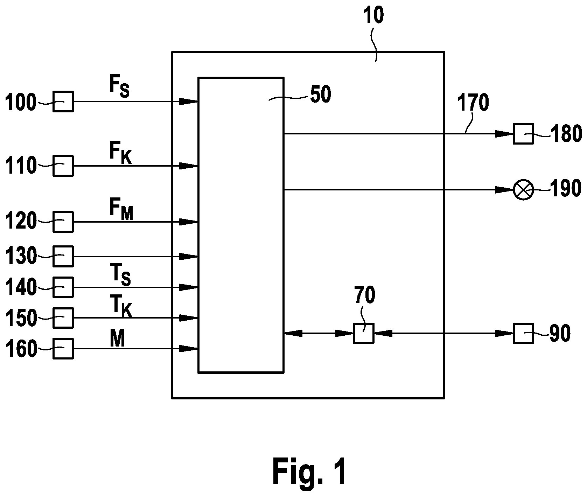

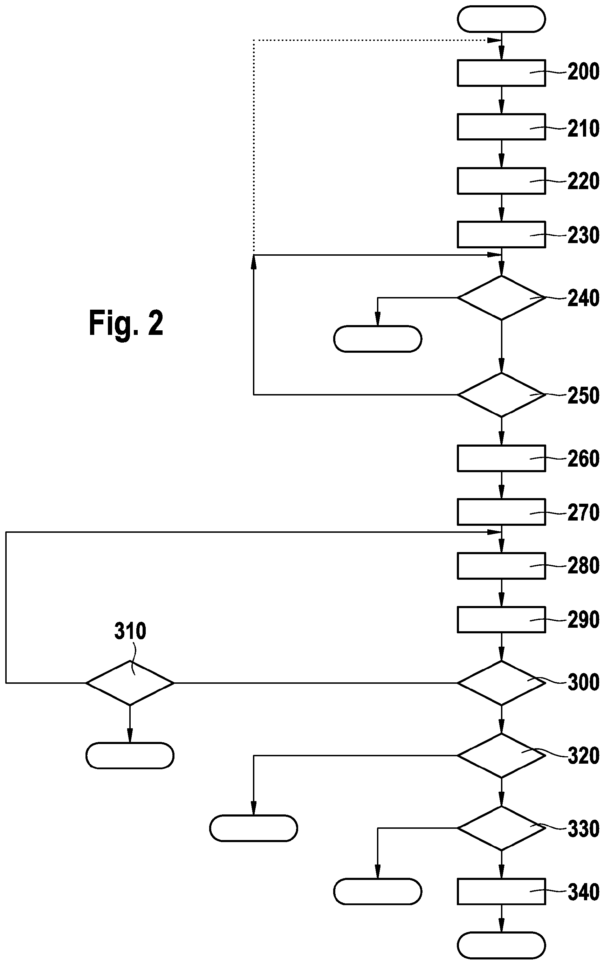

Die Figur 1 zeigt beispielhaft eine mögliche Realisierung einer erfindungsgemäßen Überwachung in Form einer Vorrichtung während Figur 2 das Flussdiagramm eines entsprechenden Verfahrens darstellt.

### Ausführungsbeispiel

Beim Betrieb eines Hybridantriebs eines Fahrzeugs werden üblicherweise ein Verbrennungsmotor und eine elektrische Maschine verwendet, die je nach Betriebszustand des Fahrzeugs unterschiedlich zum Antrieb des Fahrzeugs beitragen. Um die einzelnen Einheiten hinsichtlich ihrer Funktionalität zu überwachen, ist hierbei vorgesehen, die Temperaturen des Verbrennungsmotors bzw. der elektrische Maschine aufzunehmen. Als typische Temperaturen, die repräsentativ für die beiden Einheiten verwendet werden können, haben sich dabei die Kühlmitteltemperatur des Verbrennungsmotors und die Ständertemperatur der elektrischen Maschine bewährt. Maßgeblich wird in dieser Erfindung dabei davon ausgegangen, dass sich nach Abschaltung des Verbrennungsmotors die Temperaturen der beiden Einheiten annähern. Wird somit nach einer bestimmten Zeit eine zu große Temperaturdifferenz zwischen den beiden Werten festgestellt, kann auf einen möglichen Fehler geschlossen werden.

In Figur 1 ist schematisch eine Vorrichtung dargestellt, mit der eine derartige Plausibilisierung der Temperaturen durchgeführt werden kann. Typischerweise wird eine erfindungsgemäße Überwachung in einem Steuergerät 10 durchgeführt, die eine Verarbeitungseinheit 50 beispielsweise in Form eines Mikroprozessors aufweist. In dieser Verarbeitungseinheit 50 werden vor dem Start der Fehlererkennung zunächst durch eine geeignete Einrichtung 100 bzw. 110 die Fehler Fₛ der Ständertemperatursensoren bzw. die Fehler F_{K} der Kühlmitteltemperatursensoren abgefragt. Weiterhin wird mittels einer weiteren Einrichtung überprüft, ob ein Defekt F_{M} beim Abstellen des Verbrennungsmotors aufgetreten ist. Neben den Fehlern an den zu überwachenden Einheiten werden auch andere Komponenten 130 des Systems überwacht, die Auswirkungen auf das Temperaturverhalten des Verbrennungsmotors und der elektrischen Maschine haben können. So kann beispielsweise festgestellt werden, ob ein Kühlmittelaustausch stattgefunden hat oder eine Standheizung ohne Betrieb des Verbrennungsmotors aktiviert wurde.

Wurde festgestellt, dass kein Fehler bei der Erfassung der Temperatur oder den zu überwachenden Komponenten vorliegt und wird von einer entsprechenden Einrichtung 160 gemeldet, dass der Verbrennungsmotor ausgeschaltet ist (Flag M), werden die Ständertemperatur Tₛ der elektrischen Maschine mittels eines Ständersensors 140 sowie die Kühlmitteltemperatur T_{K} des Verbrennungsmotors mittels eines Kühlmittelsensors 150 in die Verarbeitungseinheit 50 eingelesen. Um eine möglichst genaue Aussage über die Kühlmitteltemperatur zu erlangen, ist dabei vorgesehen, den Kühlmittelsensor möglichst nahe am Verbrennungsmotor zu platzieren.

Die Verarbeitungseinheit 50 vergleicht die Temperaturwerte T_{S} und T_{K}, bzw. deren Temperaturdifferenz ΔT mit den für das vorliegende System typischen Werten. Diese für den Vergleich benutzten typischen Werte können in Form eine Kennlinie K in einem Speicher 70 im Steuergerät 10 abgespeichert sein, auf die die Verarbeitungseinheit 50 zugreifen kann. Alternativ zu einer Kennlinie K kann in diesem Speicher 70 auch ein Datenfeld oder ein Kennlinienfeld abgespeichert sein. Der Vorteil eines derartigen Daten- oder Kennlinienfeldes liegt darin, dass aufgrund von Störungen, die bei den Komponenten 130 festgestellt werden, unterschiedliche Daten oder Kennlinien ausgewählt werden können. Dies erlaubt es der Überwachung, auch bei vorhandenen ausgewählten Störungen eine Überwachung und somit eine Fehlererkennung durchzuführen.

Weicht die ermittelte Temperaturdifferenz ΔT zu weit von den vorgesehenen typischen Systemwerten ab, so erkennt die Verarbeitungseinheit 50 einen Fehler. Dabei kann insbesondere vorgesehen sein, dass der Vergleich der Temperaturdifferenz ΔT mit den typischen Werten erst nach einer vorgebbaren Zeitverzögerung erfolgt. Denkbar ist hierbei, eine für den Verbrennungsmotor typische Abstellzeit t_{M} im Speicher 50 abzuspeichern, um Temperatureffekte zu eliminieren, die beim Abstellvorgang des Motors vorkommen.

Erkennt die Verarbeitungseinheit 50 eine unzulässig hohe Abweichung von den typischen Werten des Systems, wird eine Fehlermeldung 170 an eine Steuerung bzw. Regelung 180 des Verbrennungsmotors weitergeleitet. Diese Fehlermeldung 170 kann dann beim Neustart bzw. bei der Steuerung des Verbrennungsmotors genutzt werden, um eine Beschädigung des Systems vorzubeugen. Optional kann auch vorgesehen sein, die Fehlermeldung an eine entsprechende Anzeige 190 im Fahrzeug auszugeben, um den Fahrer zu informieren.

Der Inhalt des Speichers 70 kann auch durch ein externes Eingabeinterface 90 aktualisiert werden kann, beispielsweise nach dem Austausch des Kühlmittels oder dem Einbau eines neuen Verbrennungsmotors. Somit können sowohl neue Kennlinien aber auch Abstellzeiten für die geänderten Komponenten in das System eingespeichert werden. Weiterhin kann vorgesehen sein, dass die Fehlermeldung 170 einen entsprechenden Eintrag im Speicher 70 vornimmt, der dann bei der regelmäßig stattfindenden Inspektion abgerufen und überprüft werden kann.

Das Flussdiagramm der Figur 2 stellt einen Algorithmus dar, wie er beispielsweise in der Verarbeitungseinheit 50 oder einem sonstigen hierzu geeigneten Mikroprozessor zur Überwachung des Verbrennungsmotors bzw. der elektrischen Maschine durchgeführt werden kann. Als Startbedingung für diesen Algorithmus kann beispielsweise die eingelesene Information M dienen, die eine Abschaltung des Verbrennungsmotors anzeigt (Flag M = off). Es kann jedoch auch vorgesehen sein, dass der Algorithmus zu einem anderen Zeitpunkt nach dem Ausschalten des Verbrennungsmotors gestartet wird, beispielsweise indem bewusst eine Zeitverzögerung zwischen der Abschaltung des Motors und dem Start des Algorithmus berücksichtigt wird. Diese Zeitverzögerung kann dazu genutzt werden, weitere Überwachungsvorgänge ablaufen zu lassen, z.B. Überwachungen der Funktionsfähigkeit der eingesetzten Sensoren.

Nach dem Start des Algorithmus" wird in Schritt 200 zunächst erfasst, ob ein Fehler F_{S} des Ständersensors vorliegt. Hierbei kann es sich beispielsweise um Sensorfehler wie einen Kurzschluss oder eine Signalunterbrechung handeln. Anschließend wird in Schritt 210 entsprechend erfasst, ob ein Fehler F_{K} des Kühlmittelsensors vorliegt. Anschließend wird im Schritt 220 die Motorabstellzeit t_{M} des Verbrennungsmotors erfasst bzw. eingelesen. Zu diesem Zweck kann vorgesehen sein, dass entsprechende Daten im Speicher 70 eingespeichert sind. Alternativ kann jedoch auch vorgesehen sein, dass ein externes Steuergerät, z.B. das Steuergerät des Verbrennungsmotors, diese Information an die Verarbeitungseinheit 50 liefert. Optional kann auch vorgesehen sein, dass die Verarbeitungseinheit 50 die Motorabstellzeit t_{M} aus vorangegangenen Ansteuerzyklen selbst ermittelt und intern abspeichert. Im Schritt 230 wird ein Fehler erkannt, ob während des Abschaltvorgangs des Verbrennungsmotors bzw. innerhalb der Abstellzeit nach Abschaltung des Motors Fehler aufgetreten ist. Sind in den vorangegangenen Schritten Fehler erfasst worden, die es unmöglich machen eine Plausibilitätsüberwachung durchzuführen, wird der Algorithmus in Schritt 240 abgebrochen. Wurden jedoch keine Fehler erfasst oder können die Fehler durch die Auswahl einer anderen abgespeicherten Kennlinie kompensiert werden, so wird im Schritt 250 überprüft, wie viel Zeit t_{S} seit dem Abschalten des Verbrennungsmotors vergangen ist. Ist zu diesem Zeitpunkt die Motorabstellzeit t_{M} noch nicht erreicht, d.h. ist t_{S}< t_{M}, werden wahlweise die Schritte 200 bis 240 oder nur der Schritt 240 wiederholt. Optional kann auch vorgesehen sein, den Algorithmus zu beenden und neu zu starten. Übersteigt die vergangene Zeit tₛ jedoch die Motorabstellzeit t_{M}, so werden im Schritt 260 sowohl die Kühlmitteltemperatur T_{K} als auch die Ständertemperatur T_{S} eingelesen und im nachfolgenden Schritt 270 die Differenz ΔT (= T_{S} - T_{K}) gebildet. Gleichzeitig wird bei der Aufnahme der Temperaturwerte die vergangene Zeit t_{S} gespeichert. Zur Durchführung eines Vergleichs mit typischen Werten wird daraufhin in Schritt 280 eine Kennlinie K (ΔT, t_{S}) eingelesen, die eine Abhängigkeit der Temperaturdifferenz von der vergangenen Zeit seit Abschaltung des Verbrennungsmotors aufweist. Optional kann in einem weiteren Schritt 290 aus der bei der Aufnahme der Temperaturwerte vergangenen Zeit t_{S} und der Kennlinie K (ΔT, t_{S}) ein Schwellenwert SW_{T} gebildet werden. Der Schwellenwert SW_{T} stellt dabei eine typischerweise erreichbare Temperaturdifferenz nach der Zeit tₛ dar, ggf. mit einer vorgebbaren Varianz. Im Schritt 300 werden dann Störungen des Systems abgefragt, die eine sinnvolle Auswertung mit der eingelesenen Kennlinie K verhindern. Für diesen Fall ist der Übergang zum Schritt 310 vorgesehen. Sind die Störungen jedoch durch eine Auswahl einer anderen Kennlinie kompensierbar, wird nach dem Schritt 310 der Algorithmus beginnend mit dem Schritt 280 erneut durchlaufen, wobei dann eine entsprechend geänderte Kennlinie K eingelesen wird. Andernfalls wird der Algorithmus mit dem Schritt 310 beendet. Liegen jedoch keine Störungen vor, folgt auf den Schritt 300 der Schritt 320. In diesem Schritt wird überprüft, ob die Temperaturdifferenz gegenüber dem Schwellenwert SW_{T} oder dem gemäß der Kennlinie zu erwartenden Wert unplausibel hohe oder niedrige Werte aufweist. Sollte dies der Fall sein, wird der Algorithmus beendet. Ist die Temperaturdifferenz jedoch innerhalb einer vorgebbaren Toleranz, wird in Schritt 330 überprüft, ob die Temperaturdifferenz oberhalb des Schwellenwerts SW_{T} bzw. des zu erwartenden Werts gemäß der Kennlinie K liegt. Bei einem Wert ΔT < SW_{T} kann davon ausgegangen werden, dass das System den Erwartungen gemäß funktioniert, so dass der Algorithmus ohne Fehlermeldung beendet werden kann. Liegt der Wert gemäß ΔT > SW_{T} jedoch oberhalb des erwarteten Wertes, wird eine Fehlermeldung erzeugt, die im Schritt 340 an ein Steuergerät des Verbrennungsmotors weitergeleitet wird. Mit Hilfe dieser Fehlermeldung kann bei einem Neustart bzw. bei der weiteren Ansteuerung des Motors eine Beschädigung verhindert werden.

### Bezugszeichenliste

- F_{S}: Fehler des Ständersensors
- F_{K}: Fehler des Kühlmittelsensors
- F_{M}: Fehler der Motor-Abstellzeit
- M: Information Verbrennungsmotor an/aus
- t_{M}: Motorabstellzeit
- tₛ: Zeit seit Start des Algorithmus'
- T_{S}: Ständertemperatur
- T_{K}: Kühlmitteltemperatur
- ΔT: Temperaturunterschied zwischen Ständer und Kühlmittel
- K: Kennlinie
- SW_{T}: Schwellwerttemperatur, die nach tₛ erreicht sein muss

## Patentansprüche

1. Vorrichtung zur Überwachung des Betriebs eines Hybridantriebs in einem Fahrzeug, wobei der Hybridantrieb einen Verbrennungsmotor und eine elektrische Maschine aufweist, mit einem Vergleichsmittel (50), **dadurch gekennzeichnet, dass** das Vergleichsmittel (50) die Temperatur der elektrischen Maschine repräsentierende erste Temperaturgröße (T_{S}) und eine die Temperatur des Verbrennungsmotors repräsentierende zweite Temperaturgröße (T_{K}) erfasst, wobei das Vergleichsmittel (50) eine Fehlermeldung erzeugt, wenn die erste und die zweite Temperaturgröße unzulässig weit auseinander liegen und wobei die Erkennung des Fehlers nach einer vorgegebenen Zeitdauer (t_{M}) nach Abschaltung des Verbrennungsmotors startet.

2. Vorrichtung nach Anspruch 1, **dadurch gekennzeichnet, dass** das Vergleichsmittel (50) die Fehlermeldung in Abhängigkeit von der Abschaltung des Verbrennungsmotors erzeugt, wobei insbesondere vorgesehen ist, dass bei der Erkennung des Fehlers die Zeitdauer (tₛ) berücksichtigt wird, die seit dem Abschalten des Verbrennungsmotors vergangen ist.

3. Vorrichtung nach einem der vorhergehenden Ansprüche, **dadurch gekennzeichnet, dass** die erste Temperaturgröße die Kühlmitteltemperatur des Verbrennungsmotors und/oder die zweite Temperaturgröße die Ständertemperatur der elektrischen Maschine repräsentiert.

4. Verfahren zur Überwachung des Betriebs eines Hybridantriebs in einem Fahrzeug, insbesondere zur Durchführung in einer Vorrichtung nach einem der Ansprüche 1 bis 4, wobei der Hybridantrieb einen Verbrennungsmotor und eine elektrische Maschine aufweist, wobei eine die Temperatur der elektrischen Maschine repräsentierende erste Temperaturgröße (T_{S}) und eine die Temperatur des Verbrennungsmotors repräsentierende zweite Temperaturgröße (T_{K}) erfasst werden, **dadurch gekennzeichnet, dass** ein Fehler erkannt wird, wenn die erste und die zweite Temperaturgröße unzulässig weit auseinander liegen.

5. Verfahren nach Anspruch 4, **dadurch gekennzeichnet, dass** der Fehler in Abhängigkeit von der Abschaltung des Verbrennungsmotors erkannt wird, wobei insbesondere vorgesehen ist, dass bei der Erkennung die Zeitdauer (tₛ) berücksichtigt wird, die seit dem Abschalten des Verbrennungsmotors vergangen ist.

6. Verfahren nach einem der Ansprüche 4 oder 5, **dadurch gekennzeichnet, dass** die Erkennung nach einer vorgegebenen Zeitdauer (t_{M}) nach Abschaltung des Verbrennungsmotors startet.

7. Verfahren nach einem der Ansprüche 4 bis 6, **dadurch gekennzeichnet, dass** die erste Temperaturgröße die Kühlmitteltemperatur des Verbrennungsmotors und/oder die zweite Temperaturgröße die Ständertemperatur der elektrischen Maschine repräsentiert.

8. Verfahren nach einem der Ansprüche 4 bis 7, **dadurch gekennzeichnet, dass** die Differenz (ΔT) der ersten und der zweiten Temperaturgröße gebildet wird, wobei die Erkennung des Fehlers in Abhängigkeit eines Vergleichs dieser Differenz mit einer vorgegebenen Kennlinie (K) erfolgt.

9. Verfahren nach einem der Ansprüche 4 bis 8, **dadurch gekennzeichnet, dass** bei der Erkennung des Fehlers ein Austausch von Komponenten und/oder ein Defekt von Komponenten und/oder vorgegebene Betriebszustände des Fahrzeugs berücksichtigt werden.

10. Verfahren nach einem der Ansprüche 4 bis 9, **dadurch gekennzeichnet, dass** der erkannte Fehler beim Neustart des Verbrennungsmotors berücksichtigt wird.

## Claims

1. Device for monitoring the operation of a hybrid drive in a vehicle, wherein the hybrid drive has an internal combustion engine and an electric machine, having a comparator means (50), **characterized in that** the comparator means (50) detects a first temperature variable (Ts) representing the temperature of the electric machine and a second temperature variable (T_{K}) representing the temperature of the internal combustion engine, wherein the comparator means (50) generates a fault message if the first and second temperature variables are inadmissibly far apart from one another, and wherein the detection of the fault starts after a predefined time period (t_{M}) after the switching off of the internal combustion engine.

2. Device according to Claim 1, **characterized in that** the comparator means (50) generates the fault message as a function of the switching off of the internal combustion engine, wherein, in particular, there is provision that the time period (tₛ) which has passed since the switching off of the internal combustion engine is taken into account during the detection of the fault.

3. Device according to one of the preceding claims, **characterized in that** the first temperature variable represents the coolant temperature of the internal combustion engine and/or the second temperature variable represents the stator temperature of the electric machine.

4. Method for monitoring the operation of a hybrid drive in a vehicle, in particular for execution in a device according to one of Claims 1 to 4, wherein the hybrid drive has an internal combustion engine and an electric machine, wherein a first temperature variable (T_{S}) representing the temperature of the electric machine and a second temperature variable (T_{K}) representing the temperature of the internal combustion engine are detected, **characterized in that** a fault is detected if the first and second temperature variables are inadmissibly far apart from one another.

5. Method according to Claim 4, **characterized in that** the fault is detected as a function of the switching off of the internal combustion engine, wherein, in particular, there is provision that the time period (tₛ) which has passed since the switching off of the internal combustion engine is taken into account during the detection.

6. Method according to one of Claims 4 or 5, **characterized in that** the detection starts after a predefined time period (t_{M}) after the switching off of the internal combustion engine.

7. Method according to one of Claims 4 to 6, **characterized in that** the first temperature variable represents the coolant temperature of the internal combustion engine and/or the second temperature variable represents the stator temperature of the electric machine.

8. Method according to one of Claims 4 to 7, **characterized in that** the difference (ΔT) between the first and second temperature variables is formed, wherein the detection of the fault is carried out as a function of a comparison of this difference with a predefined characteristic curve (K) .

9. Method according to one of Claims 4 to 8, **characterized in that** a replacement of components and/or a defect in components and/or predefined operation states of the vehicle are/is taken into account during the detection of the fault.

10. Method according to one of Claims 4 to 9, **characterized in that** the detected fault is taken into account during the restarting of the internal combustion engine.

## Revendications

1. Dispositif de surveillance du fonctionnement d'un groupe propulseur hybride dans un véhicule, le groupe propulseur hybride possédant un moteur à combustion interne et une machine électrique, comprenant un moyen comparateur (50), **caractérisé en ce que** le moyen comparateur (50) collecte une première grandeur de température (T_{S}) qui représente la température de la machine électrique et une deuxième grandeur de température (T_{K}) qui représente la température du moteur à combustion interne, le moyen comparateur (50) générant un message d'erreur lorsque les première et deuxième grandeurs de température présentent un écart important non autorisé entre elles et la reconnaissance du défaut commençant après une durée (t_{M}) prédéfinie après la mise à l'arrêt du moteur à combustion interne.

2. Dispositif selon la revendication 1, **caractérisé en ce que** le moyen comparateur (50) génère le message d'erreur en fonction de la mise à l'arrêt du moteur à combustion interne, en prévoyant notamment de tenir compte, lors de la reconnaissance du défaut, de la durée (t_{S}) qui s'est écoulée depuis la mise à l'arrêt du moteur à combustion interne.

3. Dispositif selon l'une des revendications précédentes, **caractérisé en ce que** la première grandeur de température représente la température du liquide de refroidissement du moteur à combustion interne et/ou la deuxième grandeur de température représente la température du stator de la machine électrique.

4. Procédé de surveillance du fonctionnement d'un groupe propulseur hybride dans un véhicule, notamment destiné à être mis en oeuvre dans un dispositif selon l'une des revendications 1 à 4, le groupe propulseur hybride possédant un moteur à combustion interne et une machine électrique, une première grandeur de température (T_{S}) qui représente la température de la machine électrique et une deuxième grandeur de température (T_{K}) qui représente la température du moteur à combustion interne étant collectées, **caractérisé en ce qu'**un défaut est reconnu lorsque les première et deuxième grandeurs de température présentent un écart important non autorisé entre elles.

5. Procédé selon la revendication 4, **caractérisé en ce que** le défaut est reconnu en fonction de la mise à l'arrêt du moteur à combustion interne, en prévoyant notamment de tenir compte, lors de la reconnaissance, de la durée (t_{S}) qui s'est écoulée depuis la mise à l'arrêt du moteur à combustion interne.

6. Procédé selon l'une des revendications 4 ou 5, **caractérisé en ce que** la reconnaissance commence après une durée (t_{M}) prédéfinie après la mise à l'arrêt du moteur à combustion interne.

7. Procédé selon l'une des revendications 4 à 6, **caractérisé en ce que** la première grandeur de température représente la température du liquide de refroidissement du moteur à combustion interne et/ou la deuxième grandeur de température représente la température du stator de la machine électrique.

8. Procédé selon l'une des revendications 4 à 7, **caractérisé en ce que** la différence (ΔT) des première et deuxième grandeurs de température est formée, la reconnaissance du défaut étant effectuée en fonction d'une comparaison de cette différence avec une courbe caractéristique (K) prédéfinie.

9. Procédé selon l'une des revendications 4 à 8, **caractérisé en ce qu'**un remplacement de composants et/ou une défaillance de composants et/ou des états opérationnels prédéfinis du véhicule sont pris en compte lors de la reconnaissance du défaut.

10. Procédé selon l'une des revendications 4 à 9, **caractérisé en ce que** le défaut reconnu est pris en compte lors du redémarrage du moteur à combustion interne.
